# EUROPEAN PATENT APPLICATION

(11) **EP 3 399 366 A1**
(43) Date of publication of application: **07.11.2018**
(21) Application number: 17305506.2
(22) Date of filing: 04.05.2017
(51) Int. Cl.: G02C 7/02, B29D 11/00, G02C 7/12, G02C 7/14, G02C 7/06

(54) **BACK SIDE FRESNEL OPHTHALMIC LENS WITH A LIMITED TRANSMITTANCE OF VISIBLE LIGHT**

(71) Applicant: Essilor International, 94220 Charenton-le-Pont (FR)
(72) Inventor: COLAS, Pauline, 94220 CHARENTON LE PONT (FR); HUBERT, Julien, 94220 CHARENTON LE PONT (FR)
(74) Representative: Cabinet Plasseraud

(57) **Abstract**

The present invention relates to an ophthalmic lens (1) having a front face (11) having a front power and a back face (12) having a back power, the ophthalmic lens (1) having a prescription resulting from the combination of the front and back powers, the back face (12) presenting Fresnel rings (121) and the ophthalmic lens (1) having a transmittance of visible light smaller than 80%.

It also relates to a semi-finished blank (2) from which the ophthalmic lens (1) can be manufactured, a method for manufacturing an ophthalmic lens, a system for the execution of the method, and a program comprising program instructions for performing the method.

## Description

### Technical field

The present application relates to an ophthalmic lens and a method for manufacturing an ophthalmic lens, and more specifically to a tinted ophthalmic lens and a method for manufacturing a tinted ophthalmic lens. The present invention also relates to a system for the execution of such a method and a program comprising program instructions for performing such a method when the program is executed by a computer.

### Prior art

Tinted lenses are known in the prior art. They are primarily used as protection for the eyes, for example from sunlight. They come in various shapes, sizes and tints, the choice of which basically depends on the wearer's choice and aesthetic influences. For non-corrective tinted lenses there are not much obstacles in the combined choice of shape, size and tint. This is untrue for corrective tinted lenses also called tinted ophthalmic lenses.

Indeed, the need of correction can greatly influence the tinted ophthalmic lens's aesthetic, such that choice of shape, size and tint must be made according to the correction, which in the end reduces the possibilities. One of such influence is edge thickening.

Therefore, there is still a need to provide a method for manufacturing a tinted ophthalmic lens enabling a various choice of designs, and if possible as wide as for tinted non-corrective lenses.

### Summary of the invention

One aim of the present invention is to overcome at least one of the drawbacks of the prior art.

To this aim, the present invention provides an ophthalmic lens having a front face having a front power and a back face having a back power, the ophthalmic lens having a prescription resulting from the combination of the front and back powers, the back face presenting Fresnel rings and the ophthalmic lens having a transmittance of visible light smaller than 80%.

Other optional and non-limiting features of the ophthalmic lens are as follows.

The ophthalmic lens may further comprise at least one of a mirror, a partial mirror, a dye contained in the lens substrate, a tinted layer, a tinted film, a polarized layer or a polarized film.

The back face may be a surface of revolution.

The front face may be a cylinder and/or a progressive surface.

The present invention also provides a semi-finished blank comprising a back face and a front face, the back face presenting Fresnel rings and the semi-finished blank having a transmittance of visible light smaller than 80%. The blank is preferably a solid of revolution.

The present invention also provides a method for manufacturing such an ophthalmic lens comprising:
- providing prescription data;
- providing a semi-finished blank comprising a back face and a front face, and having a back power, the back face presenting Fresnel rings;
- surfacing the front face of the semi-finished blank based on the prescription data and the back power to obtain an ophthalmic lens with the prescription; and
- reducing the transmittance of visible light of the lens to a transmittance of visible light smaller than 80%.

The semi-finished blank may be selected from a limited set of at least two semi-finished blanks on the basis of the prescription data.

The method may further comprise configuring the lens to be mountable in a frame presenting frame dimensions, the semi-finished blank being selected from a limited set of at least two semi-finished blanks on the basis of the frame dimensions.

The lens may comprise at least one of a mirror, a partial mirror, a dye contained in the lens substrate, a tinted layer, a tinted film, a polarized layer or a polarized film.

Reducing transmittance of visible light of the lens may be carried out through a method selected from the group consisting of dip coating, spin coating, dye sublimation coating, polarizing lamination or interference triggering coating.

The present invention further provides a system for the execution of the method for manufacturing an ophthalmic lens as described above.

The present invention also provides a program comprising program instructions for performing the method for manufacturing an ophthalmic lens as described above, when the program is executed by a computer.

The combined use of tinted ophthalmic lens and Fresnel rings results not only in a tinted ophthalmic lens with thinner edge but also in the Fresnel rings at its back face to be concealed by the tint and in reduced sparkling effect due to the Fresnel rings.

### Drawings

Other objectives, features, and advantages will become apparent upon reading the following exemplary and non-limiting description with reference to the following exemplary and non-limiting figures, wherein,
- figure 1 is a diagram showing the steps of the method for manufacturing an ophthalmic lens according to the invention;
- figure 2 illustrates a partial cross-section of ophthalmic lenses (the front faces thereof after surfacing are indicated with broken lines, the number is the power) obtained from the same semi-finished blank (continuous line);
- figure 3 to 5 are schematic representations of a partial cross-section of semi-finished blanks according to the invention forming a series thereof among which the semi-finished blank lens to be surfaced may be chosen.

### Description

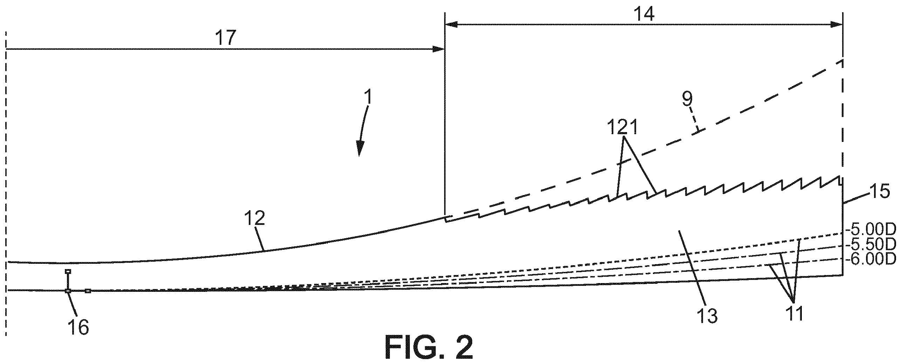

An ophthalmic lens according to the invention is described hereafter with reference to figure 2.

The ophthalmic lens **1** has a transmittance of visible light smaller than 80% and comprises a front face **11** with a front power and a back face **12** with a back power. The ophthalmic lens **1** further has a prescription resulting from the combination of the front and back powers. The back face **12** presents Fresnel rings **121**. Typically, between the front and back surfaces **11**, **12** is a lens substrate **13**.

Visible light is considered to encompass any wavelength from 390 to 700 nm. Through the whole specification, including the claims, the word "transmittance" refers to the spectral hemispherical transmittance in frequency. The transmittance of the ophthalmic lens **1** is the overall transmittance through both front and back faces of the ophthalmic lens **1**. The reduced transmittance of the ophthalmic lens **1** reduces visibility of the Fresnel rings **121** for observer looking at the ophthalmic lens **1** in a direction from the front face **11** towards the back face **12**. It further reduces undesired reflection on the Fresnel rings **121**, for example due to sunlight by attenuating light before it reaches the Fresnel rings.

The reduced transmittance of the ophthalmic lens **1** also reduces the disturbance caused by the presence of the Fresnel rings **121** for the ophthalmic lens wearer.

The Fresnel rings **121** are typically provided at the periphery of the back face **12**, *i.e.* they occupy an annular area **14** extending from the edge **15** of the ophthalmic lens **1** towards the optical center **16** thereof, preferably leaving a circular area **17** free from Fresnel rings **121** with a diameter of about 15 to 25 cm.

The reduced transmittance may be provided by at least one of a mirror or a partial mirror, a tinted layer, a tinted film, a polarized layer and a polarized film provided onto the ophthalmic lens. Alternatively or additionally, the reduced transmittance may be provided by a dye contained in the lens substrate **13**. Throughout the whole specification, including the claims, a "layer" refers to a layer of the lens substrate **13** of the ophthalmic lens **1** whereas a "film" refers to an additional layer of material applied onto the ophthalmic lens **1**.

Preferably, the transmittance of visible light is smaller than 75%, 70%, 65%, 60%, 55%, 50%, 45%, 40%, 35%, 30%, 25%, 20%, 15%, or 10%. Preferably, the transmittance of visible light is higher than 8%, 10%, 15%, 20%, 25%, 30%, 35%, 40%, 45%, 50%, 55%, 60%, 65%, 70%, or 75%. Any combination of both higher and lower limits is contemplated and considered disclosed herein.

The front face **11** is advantageously a continuous surface, *i.e.* the surface thereof is derivable at least at the first order at any point thereof except the edge. This means that the front face does not bear any Fresnel rings.

The front face **11** may provide for correction, for example, the front face **11** provides at least one of a spherical power, a cylindrical power and an addition power that corresponds to the prescription. The front face **11** may be a spherical, a cylinder and/or a progressive surface.

The back face **12** may provide for thickness reduction. It is advantageous to provide thickness reduction through Fresnel rings on the back face **12** because the thickness reduction so provided is superior to a thickness reduction through Fresnel rings on the front face. Thus, the manufacturing costs can be lowered because lesser complex Fresnel rings are needed. The thickness reduction is observable on figure 2, where the more conventional back face that would be required without Fresnel ring is indicated in broken line **9**.

The back face **12** may be a surface of revolution or a portion thereof. The back face **12** is a surface of revolution when no edging of the semi-finished blank was carried out or the overall outline of the ophthalmic lens **1** is circular and centered on the optical center **16** of the ophthalmic lens **1**. It is a portion of a surface of revolution when edging was carried out, particularly to fit into a non-circular frame, or despite being circular the geometrical center of the ophthalmic lens **1** is not aligned with its optical center **16**.

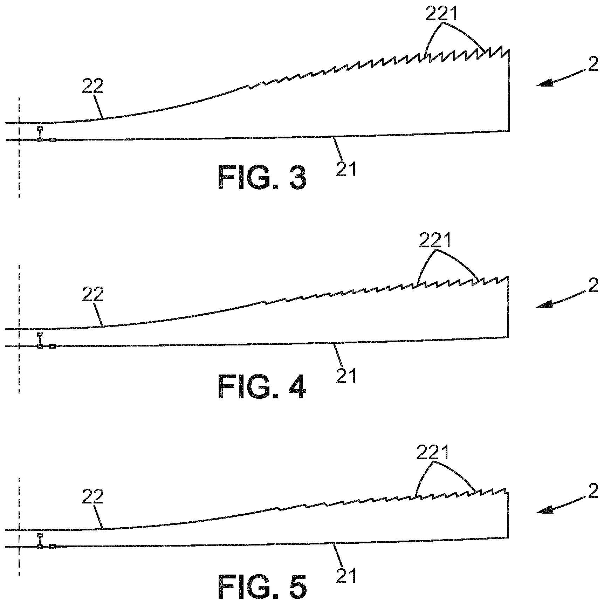

A semi-finished blank according to the invention will be described hereafter with reference to figures 3 to 5.

The semi-finished blank **2** comprises a back face **22** and a front face **21**, the back face presenting Fresnel rings **221** and the semi-finished blank **2** having a transmittance of visible light smaller than 80%.

Preferably, the transmittance of visible light is smaller than 75%, 70%, 65%, 60%, 55%, 50%, 45%, 40%, 35%, 30%, 25%, 20%, 15%, or 10%. Preferably, the transmittance of visible light is higher than 8%, 10%, 15%, 20%, 25%, 30%, 35%, 40%, 45%, 50%, 55%, 60%, 65%, 70%, or 75%. Any combination of both higher and lower limits is contemplated and considered disclosed herein.

The back face **22** of the semi-finished blank **2** is preferably a surface of revolution. Thus, it is not necessary to pay attention to the orientation of the semi-finished blank **2** before and during surfacing the front face **21** to provide the desired prescription to the resulting ophthalmic lens **1**. Preferably the semi-finished blank **2** as a whole is a solid of revolution.

Any features about the back face **12** of the ophthalmic lens **1** as described above may also be features of the semi-finished blank **2**.

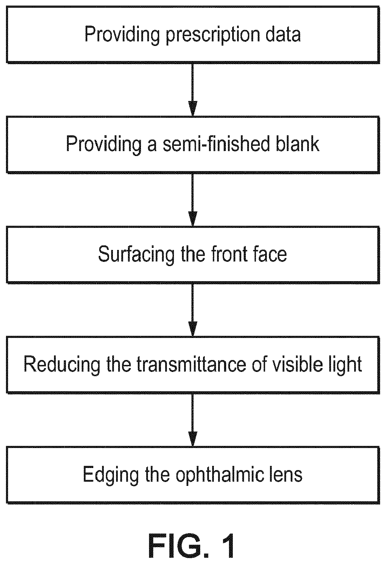

A method for manufacturing an ophthalmic lens as described above will be hereafter described with reference to figure 1.

The method comprises providing prescription data; providing a semi-finished blank comprising a back face and a front face, and having a back power, the back face presenting Fresnel rings; surfacing the front face of the semi-finished blank based on the prescription data and the back power to obtain an ophthalmic lens with the prescription; and reducing the transmittance of visible light of the lens to a transmittance of visible light smaller than 80%.

Preferably, the transmittance of visible light is smaller than 75%, 70%, 65%, 60%, 55%, 50%, 45%, 40%, 35%, 30%, 25%, 20%, 15%, or 10%. Preferably, the transmittance of visible light is higher than 8%, 10%, 15%, 20%, 25%, 30%, 35%, 40%, 45%, 50%, 55%, 60%, 65%, 70%, or 75%. Any combination of both higher and lower limits is contemplated and considered disclosed herein.

The ophthalmic lens may further present a transmittance of UV light smaller than 80%, 75%, 70%, 65%, 60%, 55%, 50%, 45%, 40%, 35%, 30%, 25%, 20%, 15%, or 10%. Thus, the ophthalmic lens further presents protection properties against harmful sunlight.

The need to surface only the front face of the semi-finished blank in order to obtain the needed prescription enables to avoid complex manufacturing of specific Fresnel surfaces for the Fresnel rings at the back face, thus reducing the manufacturing cost and complexity.

In addition, surfacing the front face of the semi-finished blank may further comprise providing additional correction such as optical aberration. Alternatively or additionally, surfacing the front face of the semi-finished blank may further use fitting parameters such as wrap angle, pantoscopic angle and center of rotation of the eye.

Providing a semi-finished blank may comprise molding the semi-finished blank in a mold having inserts for the front and back surfaces. Molding the semi-finished blank is preferably carried out by injection-molding.

The back face of the semi-finished blank is preferably a surface of revolution. Thus, it is not necessary to pay attention to the orientation of the blank before and during surfacing the front face to provide the desired prescription to the resulting ophthalmic lens. Preferably, the semi-finished blank is preferably a solid of revolution. Thus, orienting the semi-finished blank is not needed before surfacing the front face. Further, during molding there is no need to orient the inserts corresponding to the front face according to the inserts corresponding to the back face.

Providing a semi-finished blank may comprise selecting the semi-finished blank from a limited set of at least two semi-finished blanks on the basis of the prescription data. The total number of semi-finished blanks amongst which the semi-finished blank to be surfaced may be selected can be 3, 4, 5, 6, 7, 8, 9, 10, 15, 20, 25, 30, etc.

The semi-finished blanks amongst which the semi-finished blank to be surfaced is selected may differ from one another by at least one of the base curve of their back face, the number of Fresnel rings, the height of one or more Fresnel rings, the width of one or more Fresnel rings, the size of the area comprising Fresnel rings.

The semi-finished blanks amongst which the semi-finished blank to be surfaced is selected may differ from one another by the base curve of their front face.

The semi-finished blanks amongst which the semi-finished blank to be surfaced is selected may differ from one another by their size.

The selection of the semi-finished blank may be based on at least one of the base curve of its back face, the number of Fresnel rings, the height of one or more Fresnel rings, the width of one or more Fresnel rings, the size of the area comprising Fresnel rings.

The selection of the semi-finished blank may be based on its front face.

The selection of the semi-finished blank may be based on frame dimensions of a frame onto which the ophthalmic lens is to be mounted. To do so, the method can further comprise configuring the semi-finished blank so that the resulting ophthalmic lens is mountable in the frame.

The semi-finished blanks among which the semi-finished blank to be surfaced is selected advantageously comprise the same back face. This makes the manufacturing of the back face easier, especially since the prescription is provided to the ophthalmic lens through surfacing of the front face. Further, if the semi-finished blanks are molded, only a single insert (if only one insert is needed for shaping the back face) or a single set of inserts (if a plurality of insert is needed for shaping the back face) for the back face is needed.

Surfacing the front face may advantageously comprise conferring the front face with a continuous surface over its entire surface, *i.e.* the surface thereof is derivable at least at the first order at any point thereof except the edge. This means that the front face does not bear any Fresnel rings.

Surfacing the front face may advantageously comprise providing the front face with at least one of a spherical power, a cylindrical power and an addition power that correspond to the prescription. The front face may be a cylinder and/or a progressive surface.

The semi-finished blank may originally comprise at least one of a mirror, a partial mirror, a dye contained in the lens substrate, a tinted layer, a tinted film, a polarized layer or a polarized film.

Alternatively, reducing transmittance of visible light of the lens may comprise providing the semi-finished blank with at least one of a mirror, a partial mirror, a dye contained in the lens substrate, a tinted layer, a tinted film, a polarized layer or a polarized film.

For example, reducing transmittance of visible light of the lens is carried out through a method selected from the group consisting of dip coating, spin coating, dye sublimation coating (Nidek process), polarizing lamination or interference triggering coating. More generally, reducing transmittance of visible light of the lens may be carried out using any known process for tinting lenses, or process for providing polarization film or mirror coating.

Reducing transmittance of visible light of the lens is preferably carried out after surfacing the front face.

The method may further comprise edging the lens to fit an ophthalmic frame.

### Examples

Figure 2 show exemplified medium cut of ophthalmic lenses according to the invention and showing the back and front faces thereof. In this figure, the continuous line shows the back and front face of the semi-finished blank from which they are obtained; the broken lines show the front face of the ophthalmic lenses with different prescriptions (from bottom to top: -6.00 D, -5.50 D, and 5.00 D) while the back face and index of the lens substrate remain the same. Another broken line shows the back face of an ophthalmic lens with a lens substrate having same index value of one of the three ophthalmic lenses represented with broken lines if no Fresnel rings were to be used.

Thus, it is clearly observable that the thickness at the edge of the ophthalmic lenses according to the invention is thinner than that of ophthalmic lenses with same prescription and same index value without Fresnel rings.

Figures 3 to 5 illustrate together an exemplified series of semi-finished blanks from which the best suited one will be chosen for surfacing depending on the prescription, and other optical parameters. As is observable, the three semi-finished blanks present different back faces with different Fresnel rings.

## Claims

1. An ophthalmic lens (1) having a front face (11) having a front power and a back face (12) having a back power, the ophthalmic lens (1) having a prescription resulting from the combination of the front and back powers, the back face (12) presenting Fresnel rings (121) and the ophthalmic lens (1) having a transmittance of visible light smaller than 80%.

2. The ophthalmic lens (1) according to claim 1, further comprising at least one of a mirror, a partial mirror, a dye contained in the lens substrate, a tinted layer, a tinted film, a polarized layer or a polarized film.

3. The ophthalmic lens (1) according to claim 1 or 2, the back face (12) being a surface of revolution.

4. The ophthalmic lens (1) according to any one of claims 1 to 3, the front face (11) being a cylinder and/or a progressive surface.

5. A semi-finished blank (2) comprising a back face (22) and a front face (21), the back face (22) presenting Fresnel rings (221) and the semi-finished blank (2) having a transmittance of visible light smaller than 80%.

6. The semi-finished blank (2) according to claim 5, the semi-finished blank (2) being a solid of revolution.

7. A method for manufacturing an ophthalmic lens, comprising:
- providing prescription data;
- providing a semi-finished blank comprising a back face and a front face, and having a back power, the back face presenting Fresnel rings;
- surfacing the front face of the semi-finished blank based on the prescription data and the back power to obtain an ophthalmic lens with the prescription; and
- reducing the transmittance of visible light of the lens to a transmittance of visible light smaller than 80%.

8. The method according to claim 7, in which the semi-finished blank is selected from a limited set of at least two semi-finished blanks on the basis of the prescription data.

9. The method according to claim 7 or 8, further comprising configuring the lens to be mountable in a frame presenting frame dimensions, the semi-finished blank being selected from a limited set of at least two semi-finished blanks on the basis of the frame dimensions.

10. The method according to any one of claims 7 to 9, wherein the lens comprises at least one of a mirror, a partial mirror, a dye contained in the lens substrate, a tinted layer, a tinted film, a polarized layer or a polarized film.

11. The method according to any one of claims 7 to 10, wherein reducing transmittance of visible light of the lens is carried out through a method selected from the group consisting of dip coating, spin coating, dye sublimation coating, polarizing lamination or interference triggering coating.

12. A system for the execution of the method for manufacturing an ophthalmic lens of any claim 7 to 11.

13. A program comprising program instructions for performing the method for manufacturing an ophthalmic lens of any claim 7 to 11, when the program is executed by a computer.
